Europäisches Patentamt

European Patent Office

Office européen des brevets

(19)

(11) Veröffentlichungsnummer: **0 324 077**
**A2**

## (12) EUROPÄISCHE PATENTANMELDUNG

(21) Anmeldenummer: **88119165.4**

(22) Anmeldetag: **18.11.88**

(51) Int. Cl.⁴: **C08J 3/20 , C09D 11/02 , C09D 7/12**

(30) Priorität: **15.01.88 DE 3800988**

(43) Veröffentlichungstag der Anmeldung:
**19.07.89 Patentblatt 89/29**

(84) Benannte Vertragsstaaten:
**BE DE ES FR GB IT NL**

(71) Anmelder: **HÜLS AKTIENGESELLSCHAFT**
**- RSP Patente / PB 15 - Postfach 13 20**
**D-4370 Marl 1(DE)**

(72) Erfinder: **Kühnle, Adolf,Dr.**
**Hoechster Strasse 6**
**D-4370 Marl(DE)**
Erfinder: **Vey, Marlies**
**Tulpenstrasse 5**
**D-4370 Marl(DE)**

(54) **Additiv für Druckfarben und Lacke und Verfahren zu seiner Herstellung.**

(57) Wachse dienen als Mattierungsmittel für Lacke und Druckfarben. Sie müssen leicht in die mikronisierte Form vermahlbar sein und sollen sich leicht sowohl in wässerige als auch lösemittelhaltige Systeme einarbeiten lassen.

Synthetische Wachse, insbesondere Fischer-Tropsch- und Polyolefinwachse, im Gemisch mit in Druckfarben oder Lacken einsetzbaren Harzen oder Bindemitteln erfüllen die Aufgabe und führen außerdem zu verbesserter Scheuerfestigkeit.

Lacke und Druckfarben.

EP 0 324 077 A2

EP 0 324 077 A2

## Additiv für Druckfarben und Lacke und Verfahren zu seiner Herstellung

Die Erfindung betrifft ein Additiv auf Wachsbasis für Druckfarben und Lacke sowie ein Verfahren zu seiner Herstellung.

Es ist bekannt, Wachse in Druckfarben- und Lacksystemen in Mengen zwischen 0,5 und 5 Gew.-% anzuwenden, um bestimmte Eigenschaften wie z. B. die Abriebfestigkeit, Kratzfestigkeit usw. zu verbessern. Mikronisierte Wachse bieten gegenüber nicht mikronisierten den Vorteil, daß man sie entweder direkt oder in Form einer auf sogenanntem kalten Weg hergestellten Dispersion zusetzen kann. Durch die Herstellung frei fließender Wachsdispersionen bzw. pastenartiger Zubereitungen auf kaltem Weg entfällt also das zeitaufwendige und hinsichtlich Brandgefahr risikoreiche Aufschmelzen der Wachse in einem Lösemittel.

Für die Herstellung mikronisierter Wachse gibt es grundsätzlich zwei Verfahren. Das erste Verfahren ist ein Sprühprozeß, bei dem man eine heiße Wachsschmelze durch eine Düse preßt und das so erhaltene Wachspulver, falls erforderlich, einem Sichtungsprozeß unterzieht. Das zweite Verfahren ist ein Mahlprozeß, wobei in Pastillen-, Prill-, Schuppen- und Pulverform vorliegende Wachse mittels spezieller Mahlaggregate, z.B. Strahlmühlen oder mechanische Mühlen mit integrierter Sichtung, mikronisiert werden.

In Druckfarben und Lacken kommen mikronisierte Wachse beider Herstellungsverfahren zum Einsatz. DE-OS 35 33 436 lehrt, daß die im Sprühverfahren hergestellten Produkte insbesondere Druckfarbfilmen wohl eine hohe Abriebfestigkeit verleihen, dagegen relativ schlecht benetzbar bzw. dispergierbar sind; auch ist das Sprühverfahren aufwendig und teuer. Die durch Mahlen erhaltenen mikronisierten Wachse führen gemäß DE-OS 35 33 436 in Druckfarben zu einer geringeren Scheuerfestigkeit, sie lassen sich jedoch, insbesondere in Lacken, leichter dispergieren und neigen weniger zu Agglomeratbildung. Ein weiterer Vorteil ist die Wirtschaftlichkeit des Mahlprozesses. Weiter hin lehrt EP-PS 0 028 713, daß man Polyolefinwachse mühelos zur gewünschten Korngröße durch Mahlen verkleinern kann, wenn man bei der Mahlung ein hartes und sprödes Amidwachs zusetzt. Nachteilig bei diesen mikronisierten Polyolefinwachs/Amidwachsmischungen sind jedoch die begrenzten Einsatzmöglichkeiten. Diese Produkte sind nämlich praktisch nur für lösemittelhaltige Systeme, insbesondere als Mattierungsmittel für Lacke, geeignet. In wässerigen Systemen sind sie schlecht zu dispergieren und lassen sich auf direktem Wege praktisch nicht einarbeiten. Ebenso sind sie zur Verbesserung der Scheuerfestigkeit von Druckfarben wenig brauchbar.

Erwünscht ist indessen ein Polyolefinwachs, das sich nicht nur leicht vermahlen läßt, sondern danach nicht nur in lösemittelhaltigen, sondern zugleich auch in wässerigen Systemen verwendbar ist und außerdem eine hohe Scheuerfestigkeit ergibt.

Diese Aufgabe wird überraschend auf die beanspruchte Weise gelöst.

Als synthetische Wachse eignen sich grundsätzlich alle Wachse synthetischer Herkunft, beispielsweise Kohlenwasserstoffwachse und Synthesewachse mit sauerstofffunktionellen Gruppen.

Besonders geeignet sind einerseits nichtoxidierte und oxidierte Fischer-Tropsch-Wachse mit einer osmometrischen Molmasse zwischen 500 und 1 000 und Säurezahlen zwischen 0 und 20 sowie davon abgeleitete weitere Umsetzungsprodukte, andererseits nichtoxidierte und oxidierte Polyolefinwachse mit einer osmometrischen Molmasse zwischen 700 und 10 000 und Säurezahlen zwischen 0 und 40 sowie davon abgeleitete weitere Umsetzungsprodukte. Nichtoxidierte Polyolefinwachse sind Homo-und Copolymerisate des Ethylens, Propylens und Butylens. Bevorzugt sind Ethylen-Homopolymerisate, Ethylen-Propylen-Copolymerisate sowie die daraus hergestellten Wachsoxidate und Wachsester.

Geeignete Harze sind diejenigen Produkte, die in Druckfarben und Lacken üblicherweise eingesetzt werden. Sie können sowohl synthetischer, teilsynthetischer oder natürlicher Herkunft sein, wie z. B. Kohlenwasserstoffharze, Polyamidharze, Alkydharze, Maleinatharze, Polyacrylate, Harnstoffharze, Polyterpenharze, Keton-Aldehyd-Harze, Epoxidharze, Phenolharze, Cellulosederivate, Harze auf Kolophoniumbasis, Schellack und Dammar sowie alle von den vorgenannten Harzen abgeleiteten Derivate.

Für die gemeinsame Mahlung von synthetischem Wachs und Harz eignen sich beispielsweise, wie bereits eingangs erwähnt, Strahlmühlen oder mechanische Mühlen mit integrierter Sichtung. Bei der Mahlung wird so vorgegangen, daß man beide Komponenten in Pulver-, Granulat- oder Schuppenform entweder bereits vorgemischt (Trockenmischung oder durch Aufschmelzen beider Komponenten hergestellte Mischung) oder nebeneinander der Mühle zuführt. Das Gewichtsverhältnis von synthetischem Wachs zu Harz liegt bei 97 : 3 bis 50 : 50, vorzugsweise bei 95 : 5 bis 60 : 40 und insbesondere bei 90 : 10 bis 70 : 30.

Eine Verträglichkeit zwischen synthetischem Wachs und Harz ist grundsätzlich nicht erforderlich. Um alle Vorteile der erfindungsgemäß hergestellten Produkte in vollem Umfang ausnutzen zu können, ist es aber empfehlenswert, Harze zu verwenden, die mit dem jeweils verwendeten synthetischen Wachs in der Schmelze weitestgehend verträglich sind. Solche Harze sind z. B. doppelbindungsfreie Harze bzw. Harze mit niedrigem Gehalt an Doppelbindungen.

Die Mahlung kann im Normalfall ohne zusätzliche Mahlhilfsmittel durchgeführt werden. Sollte es in Einzelfällen zu Förderproblemen in der Mühle, z. B. wegen nicht ausreichender Rieselfähigkeit der Wachs/Harz-Mischung, kommen, können diese durch Zusätze eines Mahlhilfsmittels behoben werden. Zweckmäßigerweise wird in diesem Fall das Mahlhilfsmittel vor dem Mahlprozeß selbst zudosiert. Als Mahlhilfsmittel kommen Produkte in Betracht, die in Druckfarben und Lacken ohnehin Verwendung finden, wie z. B. bestimmte Produkte auf Kieselsäurebasis oder Umsetzungsprodukte technischer Fettsäuren mit vorzugsweise 12 bis 24 C-Atomen mit Ammoniak oder aliphatischen Aminen. Die Einsatzmenge bei Produkten auf Kieselsäurebasis liegt vorzugsweise zwischen 0,2 und 3 %, bei den Fettsäureamiden vorzugsweise zwischen 3 und 20 %.

Die Korngröße der Mahlprodukte richtet sich nach dem Einsatzzweck. Für manche Druckfarben- und Lacksysteme kann eine Korngröße von 99 Gew.-% kleiner 16 µm, ggf. auch kleiner 12 µm erforderlich sein, während für andere Systeme, z. B. Toluoltiefdruckfarben, Spezialtiefdruckfarben, Flexodruckfarben etc. 99 Gew.-% kleiner als 24 µm oder sogar 99 Gew.-% kleiner 32 µm ausreichend sein können.

Überraschend lassen sich die beanspruchten Mischungen aus Wachs und Harz mühelos zur gewünschten Korngröße vermahlen. Hierbei gelangt man zu Produkten, die sich für verschiedene Zwecke, wie z. B. als Kratzfestmacher, Scheuerfestigkeitsverbesserer und Mattierungsmittel für lösemittelhaltige und gleichermaßen für wässerige Druckfarben- und Lacksysteme eignen. Ein weiterer Vorteil ist, daß man mit dieser Art von Additiven durch Auswahl geeigneter Harze bzw. Bindemittel dem Brechungsindex des Lack- bzw. Druckfarbenfilms wesentlich näher kommen kann als mit bekannten Produkten. Das bedeutet, daß das Additiv im Druckfarben- bzw. Lackfilm keinen sogenannten "Schleier" bildet und somit kaum zu erkennen ist. Weiterhin lassen sich nach dem erfindungsgemäßen Verfahren auf einfache Weise Produkte mit einem hohen Anteil polarer Gruppen im Molekül herstellen, was gegenüber gängigen Produkten zu einer geringeren elektrostatischen Aufladbarkeit führt. Die Staubexplosionsgefahr ist also - sowohl was den Herstellprozeß selbst wie auch die Verarbeitung der erfindungsgemäß hergestellten Produkte anbetrifft - reduziert.

Die nachfolgenden Beispiele zeigen, daß es erfindungsgemäß gelingt, alle gewünschten Vorteile zugleich zu erreichen.

<u>Beispiele</u>

1. Mahlung:

Für die Mahlvorgänge wurde eine Labor-Luftstrahlmühle der Firma Micro-Macinazione verwendet. Der Druck lag generell bei ca. 5,5 bar. Das zu vermahlende Material wurde in Pulverform mittels der Dosiervorrichtung K'Tron (Firma Soder) in definierten Mengen in die Mühle eingespeist. Außer einer gemäß EP-OS 0 028 713 hergestellten Polyolefinwachs/Amidwachs-Mischung, die eine feinere Korngrößenverteilung aufwies, besaßen alle für die Mahlungen verwendeten Ausgangsstoffe einen weitgehend einheitlichen Feinheitsgrad:

| 20 bis 30 Gew.-% kleiner | 24 µm |
|---|---|
| 40 bis 50 Gew.-% kleiner | 48 µm |
| 60 bis 70 Gew.-% kleiner | 96 µm |
| 80 bis 90 Gew.-% kleiner | 192 µm |

Bestimmungsmethode: Laser Granulometer 715 (Firma Cilas)

1.1 Mahlung eines Polyethylenwachses (osmometrische Molmasse 1 600, Dichte 0,96 g/cm³, Tropfpunkt 122 °C)
Mahldruck: ca. 5,5 bar
Durchsatzmenge: 441 g/Stunde
Korngrößenverteilung des Ausgangsmaterial: wie bei 1.
Korngrößenverteilung des Endproduktes

| | |
|---|---|
| 10,3 Gew.-% kleiner | 4 μm |
| 20,3 Gew.-% kleiner | 8 μm |
| 35,1 Gew.-% kleiner | 12 μm |
| 49,5 Gew.-% kleiner | 16 μm |
| 66,4 Gew.-% kleiner | 24 μm |
| 74,3 Gew.-% kleiner | 32 μm |
| 80,9 Gew.-% kleiner | 48 μm |
| 89,1 Gew.-% kleiner | 96 μm |
| 95,0 Gew.-% kleiner | 192 μm |

1.2 Mahlung einer Polyethylenwachs/Amidwachs-Mischung (Verhältnis 90 : 10) gemäß EP-OS 0 028 713. Eigenschaften des Polyethylenwachses wie unter 1 beschrieben. Als Amidwachs diente Bisstearoylethylendiamin. Die beiden Wachskomponenten wurden in der Schmelze vorgemischt.

Mahldruck: ca. 5,5 bar
Durchsatzmenge: 456 g/Stunde
Korngrößenverteilung des Ausgangsmaterials: wie bei 1.
Korngrößenverteilung des Endproduktes

| | |
|---|---|
| 13,0 Gew.-% kleiner | 4 μm |
| 29,4 Gew.-% kleiner | 8 μm |
| 47,7 Gew.-% kleiner | 12 μm |
| 62,3 Gew.-% kleiner | 16 μm |
| 75,0 Gew.-% kleiner | 24 μm |
| 79,0 Gew.-% kleiner | 32 μm |
| 81,8 Gew.-% kleiner | 48 μm |
| 88,6 Gew.-% kleiner | 96 μm |
| 92,9 Gew.-% kleiner | 192 μm |

1.3 Mahlung wie unter 1.2 mit einem Polyolefinwachs/Amidwachs-Verhältnis 80 : 20 nach trockener Vormischung beider Wachskomponenten.

Mahldruck: ca. 5,5 bar
Durchsatzmengen: 449 g/Stunde
Korngrößenverteilung des Ausgangsmaterials: wie bei 1.
Korngrößenverteilung des Endproduktes

| | |
|---|---|
| 25,0 Gew.-% kleiner | 4 μm |
| 44,3 Gew.-% kleiner | 8 μm |
| 71,2 Gew.-% kleiner | 12 μm |
| 83,2 Gew.-% kleiner | 16 μm |
| 96,7 Gew.-% kleiner | 24 μm |
| 99,8 Gew.-% kleiner | 32 μm |

1.4 Mahlung wie unter 1.2 mit einem Polyolefinwachs/Amidwachs-Verhältnis 50 : 50.

Mahldruck: ca. 5,5 bar
Durchsatzmenge: 462 g/Stunde
Korngrößenverteilung des Ausgangsmaterials

| | |
|---|---|
| 75,7 Gew.-% kleiner | 24 μm |
| 94,0 Gew.-% kleiner | 48 μm |
| 94,0 Gew.-% kleiner | 96 μm |
| 94,0 Gew.-% kleiner | 192 μm |

Korngrößenverteilung des Endproduktes

4

| | |
|---|---|
| 46,4 Gew.-% kleiner | 4 μm |
| 84,4 Gew.-% kleiner | 8 μm |
| 98,5 Gew.-% kleiner | 16 μm |
| 99,5 Gew.-% kleiner | 24 μm |

1.5 Mahlung einer Polyethylenwachs/Harz-Mischung (Verhältnis 90 : 10). Eigenschaften des Polyethylenwachses wie bei 1.1. Als Harz wurden Kunstharz SK (Hüls AG) verwendet (ein modifiziertes Keton-Aldehyd Kondensationsharz). Die Wachskomponente und das Harz wurden trocken vorgemischt.

Mahldruck: ca. 5,5 bar
Durchsatzmenge: 453 g/Stunde
Korngrößenverteilung des Ausgangsmaterials: wie bei 1.
Korngrößenverteilung des Endproduktes

| | |
|---|---|
| 13,5 Gew.-% kleiner | 4 μm |
| 27,4 Gew.-% kleiner | 8 μm |
| 46,6 Gew.-% kleiner | 12 μm |
| 61,7 Gew.-% kleiner | 16 μm |
| 81,7 Gew.-% kleiner | 24 μm |
| 85,5 Gew.-% kleiner | 32 μm |
| 92,3 Gew.-% kleiner | 48 μm |
| 96,4 Gew.-% kleiner | 96 μm |
| 100,0 Gew.-% kleiner | 196 μm |

1.6 Mahlung einer Polyethylenwachs/Harz-Mischung (Verhältnis 70 : 30). Eigenschaften des Polyethylenwachses wie bei 1.1. Als Harz wurde DERTOPOL (DRT) verwendet, ein polymerisiertes Kolophonium. Die Wachskomponente und das Harz wurden trocken vorgemischt.

Mahldruck: ca. 5,5 bar
Durchsatzmenge: 449 g/Stunde
Korngrößenverteilung des Ausgangsmaterials: wie bei 1.
Korngrößenverteilung des Endproduktes

| | |
|---|---|
| 36,2 Gew.-% kleiner | 4 μm |
| 68,7 Gew.-% kleiner | 8 μm |
| 87,6 Gew.-% kleiner | 12 μm |
| 98,8 Gew.-% kleiner | 16 μm |
| 100,0 Gew.-% kleiner | 24 μm |

1.7 Mahlung einer Polyethylenwachs/Harz-Mischung (Verhältnis 80 : 20). Eigenschaften des Polyethylenwachses wie bei 1.1. Als Harz wurde BREMAR 127, ein Umwandlungsprodukt von Kolophonium (Lackharzwerke Kraemer) verwendet. Die Wachskomponente und das Harz wurden in der Schmelze vorgemischt.

Mahldruck: ca. 5,5 bar
Durchsatzmenge: 454 g/Stunde
Korngrößenverteilung des Ausgangsmaterials: wie bei 1.
Korngrößenverteilung des Endproduktes

| | |
|---|---|
| 24,1 Gew.-% kleiner | 4 μm |
| 48,4 Gew.-% kleiner | 8 μm |
| 74,9 Gew.-% kleiner | 12 μm |
| 83,7 Gew.-% kleiner | 16 μm |
| 99,5 Gew.-% kleiner | 24 μm |

1.8 Mahlung einer Polyethylenwachs/Harz-Mischung (Verhältnis (70 : 30). Eigenschaften des Polyethylenwachses wie bei 1.1. Als Harz wurde ERKAREX 555, ein Alkydharz (Lackharzwerke Kraemer) verwendet. Beide Komponente wurden in der Schmelze vorgemischt.

Mahldruck: ca. 5,5 bar

Durchsatzmenge: 451 g/Stunde

Korngrößenverteilung des Ausgangsmaterials: wie bei 1.

Korngrößenverteilung des Endproduktes

| | |
|---|---|
| 36,8 Gew.-% kleiner | 4 μm |
| 68,1 Gew.-% kleiner | 8 μm |
| 88,0 Gew.-% kleiner | 12 μm |
| 99,7 Gew.-% kleiner | 16 μm |

1.9 Mahlung einer Polyethylenoxidat/Harz-Mischung (Verhältnis (80 : 20). Das Polyethylenoxidat besaß einen Tropfpunkt von 108 °C und eine Säurezahl von 11. Als Harz wurde ALRESAT KM 444, ein Maleinatharz (Hoechst AG) verwendet. Beide Komponenten wurden trocken vorgemischt.

Mahldruck: ca. 5,5 bar

Durchsatzmenge: 445 g/Stunde

Korngrößenverteilung des Ausgangsmaterials: wie bei 1.

Korngrößenverteilung des Endproduktes

| | |
|---|---|
| 23,7 Gew.-% kleiner | 4 μm |
| 43,6 Gew.-% kleiner | 8 μm |
| 69,0 Gew.-% kleiner | 12 μm |
| 79,2 Gew.-% kleiner | 16 μm |
| 93,9 Gew.-% kleiner | 24 μm |
| 99,0 Gew.-% kleiner | 32 μm |

1.10 Mahlung einer Fischer-Tropsch-Wachs/Harz-Mischung (Verhältnis 80 : 20). Das Fischer-Tropsch-Wachs besaß eine osmometrische Molmasse von ca. 700 und einen Tropfpunkt von 107 °C. Als Harz wurde ALBERTOL KP 692, ein kolophoniummodifiziertes Phenolharz (Hoechst AG) verwendet. Beide Komponenten wurden trocken vorgemischt.

Mahldruck: ca. 5,5 bar

Durchsatzmenge: 456 g/Stunde

Korngrößenverteilung des Ausgangsmaterials: wie bei 1.

Korngrößenverteilung des Endproduktes

| | |
|---|---|
| 39,4 Gew.-% kleiner | 4 μm |
| 66,0 Gew.-% kleiner | 8 μm |
| 87,2 Gew.-% kleiner | 12 μm |
| 96,3 Gew.-% kleiner | 16 μm |
| 99,9 Gew.-% kleiner | 24 μm |

1.11 Mahlung einer Fischer-Tropsch-Wachs/Harz-Mischung (Verhältnis 80 : 20) wie bei 1.10 mit dem Erdölharz ESCOREZ 5300, ein hydriertes Kohlenwasserstoffharz (Exxon) als Harzkomponente unter Vormischung beider Komponenten in der Schmelze.

Mahldruck: ca. 5,5 bar

Durchsatzmenge: 459 g/Stunde

Korngrößenverteilung des Ausgangsmaterials: wie bei 1.

Korngrößenverteilung des Endproduktes

| 30,2 Gew.-% kleiner | 4 μm |
|---|---|
| 65,0 Gew.-% kleiner | 8 μm |
| 76,7 Gew.-% kleiner | 12 μm |
| 87,3 Gew.-% kleiner | 16 μm |
| 99,7 Gew.-% kleiner | 24 μm |

2. Benetzung der gemäß 1.1 bis 1.11 hergestellten Feinstpulver in einer wässerigen Druckfarbe

In einem 50-ml-Becherglas wurde 1 g der gemäß 1.1 bis 1.11 hergestellten Feinstpulver auf 40 ml handelsübliche wässerige Flexodruckfarbe (Typ ZW 23, Firma Siegwerk) gestreut. Die Zeit (in Minuten) bis zur vollständigen Benetzung bzw. Durchfeuchtung des jeweiligen Feinstpulvers wurde bestimmt.

| Feinstpulver | Benetzungszeit | |
|---|---|---|
| aus Mahlung 1.1 | keine Benetzung | Vergleichsbeispiel |
| aus Mahlung 1.2 | keine Benetzung | Vergleichsbeispiel |
| aus Mahlung 1.3 | keine Benetzung | Vergleichsbeispiel |
| aus Mahlung 1.4 | keine Benetzung | Vergleichsbeispiel |
| aus Mahlung 1.5 | nicht bestimmt | |
| aus Mahlung 1.6 | 3 min | |
| aus Mahlung 1.7 | 5 min | |
| aus Mahlung 1.8 | 3 min | |
| aus Mahlung 1.9 | 4 min | |
| aus Mahlung 1.10 | 4 min | |
| aus Mahlung 1.11 | nicht bestimmt | |

3. Benetzung der gemäß 1.1 bis 1.11 hergestellten Feinstpulver in einem Lack auf Lösemittelbasis

In einer verschlossenen 100-ml-Glasflasche wurden 0,5 g der gemäß 1.3 bis 1.9 hergestellten Feinstpulver - soweit sie einen Feinheitsgrad von mindestens 99 Gew.-% kleiner 32 μm aufwiesen -zusammen mit 50 ml handelsüblichem Holzlack auf Nitrocellulosebasis (Typ Clou 700, Firma Clouth) 2 Minuten lang geschüttelt. Danach wurde visuell die Verteilung des Feinstpulvers in dem Holzlack ("Homogenität") beurteilt.

| Feinstpulver | "Homogenität" visuell | |
|---|---|---|
| aus Mahlung 1.1 | nicht bestimmt | Vergleichsbeispiel |
| aus Mahlung 1.2 | nicht bestimmt | Vergleichsbeispiel |
| aus Mahlung 1.3 | gut | Vergleichsbeispiel |
| aus Mahlung 1.4 | sehr gut | Vergleichsbeispiel |

| Feinstpulver | "Homogenität" visuell | |
|---|---|---|
| aus Mahlung 1.5 | nicht bestimmt | |
| aus Mahlung 1.6 | sehr gut | |
| aus Mahlung 1.7 | sehr gut | |
| aus Mahlung 1.8 | sehr gut | |
| aus Mahlung 1.9 | gut | |
| aus Mahlung 1.10 | sehr gut | |
| aus Mahlung 1.11 | sehr gut | |

4. Prüfung der Abriebfestigkeit in einer Toluoltiefdruckfarbe

Die Toluoltiefdruckfarbe besaß folgende Zusammensetzung:

| 70 Gew.-% | Harzlösung (51 % SHEBYHARZ 68139 in Toluol) |
|---|---|
| 8 Gew.-% | Farbpigment (Permanentgelb DHG 25) |
| 21 Gew.-% | Toluol |
| 1 Gew.-% | Feinstpulver gemäß 1.1 bis 1.11 |

Die Herstellung der Toluoltiefdruckfarbe erfolgte in einer Perlmühle. Durch weitere Zugabe von Toluol wurde die Viskosität der Druckfarbe auf 47 bis 50 sec (3-mm-Auslaufbecher) eingestellt. Die gemäß 1.1 bis 1.11 erhaltenen Feinstpulver wurden mittels Dissolver in die fertige Druckfarbe eingerührt.

Die Prüfung der Abrieb- bzw. Scheuerfestigkeit der Drucke wurde mit dem Prüfbau-Quartant-Scheuerprüfer durchgeführt.

Für die Scheuerprüfung wurden von jedem Druckfarbenansatz 12 Prüfkörper hergestellt. Falls sich in Einzelfällen bei einer Serie unterschiedliche Werte hinsichtlich erreichter Anzahl an Scheuerhüben ergaben, wurden die Scheuerwerte - unter Streichung der beiden besten und der beiden schlechtesten Werte - gemittelt.

| Toluoltiefdruckfarbe mit 1 % Feinstpulver | Scheuerfestigkeit (erreichte Anzahl Scheuerhübe | |
|---|---|---|
| aus Mahlung 1.1 | 200 Scheuerhübe | Vergleichsbeispiel |
| aus Mahlung 1.2 | 200 Scheuerhübe | Vergleichsbeispiel |
| aus Mahlung 1.3 | 250 Scheuerhübe | Vergleichsbeispiel |
| aus Mahlung 1.4 | 250 Scheuerhübe | Vergleichsbeispiel |
| aus Mahlung 1.5 | 500 Scheuerhübe | |
| aus Mahlung 1.6 | 500 Scheuerhübe | |
| aus Mahlung 1.7 | nicht geprüft | |
| aus Mahlung 1.8 | über 1 000 Scheuerhübe | |
| aus Mahlung 1.9 | nicht geprüft | |
| aus Mahlung 1.10 | 350 Scheuerhübe | |
| aus Mahlung 1.11 | über 1 000 Scheuerhübe | |

**Ansprüche**

1. Verfahren zur Herstellung eines in mikronisierter Form vorliegenden Additivs auf Wachsbasis, dadurch gekennzeichnet, daß man ein synthetisches Wachs zusammen mit einem in Druckfarben oder Lacken einsetzbaren Harz bzw. festen Bindemittel im Gewichtsverhältnis 97 : 3 bis 50 : 50 einer gemeinsamen Mahlung unterwirft.

2. Verfahren nach Anspruch 1, dadurch gekennzeichnet, daß das synthetische Wachs ein Fischer-Tropsch-Wachs mit einem osmometrischen Molekulargewicht von 500 bis 1 000 oder ein Polyolefinwachs mit einem Molekulargewicht von 700 bis 10 000 ist.

3. Additiv auf Wachsbasis, erhalten nach Anspruch 1, für Druckfarben und Lacke, welches aus 50 bis 97 Gew.-% eines synthetischen Wachses und 3 bis 50 Gew.-% eines für Druckfarben und Lacke einsetzbaren Harzes bzw. festen Bindemittels besteht und in mikronisierter Form mit einer Korngrößenverteilung von 99 Gew.-% kleiner 32 $\mu$m vorliegt.